# EUROPÄISCHE PATENTSCHRIFT

(11) **EP 0 280 855 B1**
(45) Veröffentlichungstag und Bekanntmachung des Hinweises auf die Patenterteilung: **23.02.1994**
(21) Anmeldenummer: 88100655.5
(22) Anmeldetag: 19.01.1988
(51) Int. Cl.: G02C 5/12

(54) **Nasenplättchen für Brillen**
Nose pads for spectacles
Plaquettes nasales pour lunettes

(30) Priorität: 06.03.1987 DE 3707297
(43) Veröffentlichungstag der Anmeldung: 07.09.1988
(73) Patentinhaber: Frey & Winkler GmbH & Co., D-75203 Königsbach-Stein (DE)
(72) Erfinder: Kappler, Manfred, D-7530 Pforzheim (DE); Herter, Bruno, D-7535 Königsbach-Stein 1 (DE); Winkler, Rolf, D-7531 Eisingen (DE)
(74) Vertreter: Frank, Gerhard, Dipl.-Phys.

(56) Entgegenhaltungen:
- EP-A- 0 115 831
- EP-A- 0 146 934
- DE-A- 2 750 910
- DE-A- 3 417 255
- DE-A- 3 533 641
- GB-A- 516 759
- US-A- 1 930 556
- US-A- 2 082 084

## Beschreibung

Die Erfindung betrifft eine Brillenfassung bestehend aus einem Mittelteil und daran befestigten Nasenplättchen, welche aus einem harten Grundkörper aus Kunststoff oder Metall, aus wenigstens zwei an diesem Grundkörper befestigten verankerungsstiften und aus einem weichen, hautverträglichen und rutschfesten Überzug über dem Grundkörper bestehen, bei der die verankerungsstifte als Befestigungsmittel für die Nasenplättchen am Mittelteil vorgesehen sind.

Derartige Nasenplättchen (Pads) sind beispielsweise aus der US-A-1 930 556 bekannt, das Befestigungsmittel sind hier zwei blockartige Zapfen, die zur Befestigung an einem Stegarm in Löchern desselben mit diesem vernietet werden, wobei der Stegarm dann seinerseits mit dem Mittelteil der Brille verbunden ist.

Die DE-OS 33 19 827 zeigt ein "Nasenflanken-Stützplättchen", das auch bei Kunststoffbrillen verwendet werden kann; das dargestellte Stützplättchen ist einstückig aus Silikon-Kautschuk aufgebaut und mittels eines Stiels und eines Sperriegels in eine Durchgangsöffnung im Mittelteil "einknöpfbar". Die Durchgangsöffnung ist insbesondere als Langloch ausgebildet und wird vom Stiel des Pads voll ausgefüllt, wobei dann der am Ende des Stiels ausgebildete Sperriegel den Mittelteil hintergreift.

Die Ausbildung eines derartigen Langlochs ist nur bei solchen Kunststoffbrillen einfach zu bewerkstelligen, die im Spritzgußverfahren hergestellt worden sind. Zunehmend gewinnen jedoch wieder solche Kunststoffbrillen an Bedeutung, die durch Ausfräsen aus Kunststoffplatten hergestellt werden, wobei zwar größere Mengen an Ausschuß anfallen, insbesondere die gestalterischen Möglichkeiten aber größer sind als beim Spritzgußverfahren. Es versteht sich von selbst, daß in Kunststoffplatten ein Langloch sehr viel schwerer einzubringen ist, als beim Spritzgußverfahren, wo dieses Langloch durch eine entsprechende Form mit erzeugt wird. Der Anwendungsbereich dieses vorbekannten Stützplättchens erstreckt sich also weitgehend auf Kunststoffbrillen, die im Spritzgußverfahren hergestellt werden.

Bei dem extrem weichen Kunststoffmaterial des einstückigen Pads bei der vorbekannten Lösung besteht auch die Gefahr, daß der Pad sich im Langloch leicht verschiebt oder auch unbeabsichtigt wieder "herausgeknöpft" werden kann, wegen der mit der Weichheit verbundenen hohen Kompressibilität des Kunststoffmaterials. Auch die Halterung des Pads im Langloch im Mittelteil gewährleistet daher keine Sicherheit gegen Verschiebung und Verdrehen des sehr weichen Pads im Mittelteil.

Darüber hinaus ragt der Sperriegel, der den Mittelteil hintergreift, in den Glasbereich der Brille hinein, was zumindest bei bestimmten Farbgebungen der Brille ästhetisch unbefriedigend wirkt.

Das extrem weiche Material des vorbekannten Pads, so vorteilhaft es hinsichtlich seiner Trageigenschaften für den Benutzer sein mag, ist also hinsichtlich seiner Verankerungseigenschaften nicht zufriedenstellend.

Aufgabe der Erfindung ist es daher, eine Brillenfassung so zu gestalten, daß eine sichere Halterung der Nasenplättchen gewährleistet und die Montage dennoch leicht durchführbar ist.

Erfindungsgemäß wird diese Aufgabe dadurch gelöst, daß die Verankerungsstifte unmittelbar in Bohrungen des Mittelteils gehalten sind, daß die Länge der Verankerungsstifte geringer oder höchstens gleich der Dicke des Mittelteils im Bohrungsbereich ist, und daß mindestens einer der Verankerungsstifte zur Halterung im Mittelteil mindestens eine seitliche oder umlaufende Einkerbung oder Rinne aufweist, die in einer korrespondierenden Ausformung oder einem Ringwulst der zugehörigen Bohrung im Mittelteil derart einrastet, daß diese Verankerungsstifte in ihrer zugehörigen Bohrung versenkt sind.

Im Gegensatz zum Stützplättchen nach der DE-OS 33 19 827, das auf "Spezial-Einlagen" bewußt verzichtet, benutzt die Erfindung die grundlegende Konzeption der gattungsbildenden US-A 1 930 556 insoweit, als das jeweils optimale Mittel für den beabsichtigten Zweck eingesetzt wird, also der harte Grundkörper zur Erzielung einer dauerhaften und sicheren Verankerung und der weiche Überzug zur Gewährleistung angenehmer Trageigenschaften.

Durch die mindestens zwei Verankerungsstifte, die vorzugsweise in ihrer Grundform zylindrisch ausgebildet sind, und in der Längsachse des Pads liegen, kann man anstelle des bei aus Plattenmaterial gefrästen Brillen nur mühsam einzubringenden Langlochs zylindrische oder kegelstumpfförmige Bohrungen mit den üblichen Werkzeugen einbringen, wobei die Bohrungen selbst so ausgestaltet sind, daß sie die Verankerungsstifte halten können, so daß die Verankerungsstifte selbst nicht mehr aus dem Mittelteil herausstehen.

Gemäß einer Ausbildung der Erfindung können die Verankerungsstifte zur Arretierung gegen Zug in ihrer zugehörigen Bohrung eine umlaufende Rinne aufweisen, die in einer entsprechenden Ausformung oder einem Ringwulst ihrer zugehörigen Bohrung einrastet. Ergänzend zu mindestens einem solchen Verankerungsstift können auch Verankerungsstifte vorgesehen sein, die ohne derartige Formgebung ausgestattet sind, und lediglich zur Sicherung gegen Verdrehen in eine zylindrische Durchgangsbohrung im Mittelteil eingreifen.

Dadurch, daß die Verankerungsstifte gemäß der Erfindung Teil des im Nasenplättchen eingebetteten harten Grundkörpers sind, kann durch eine entsprechende Positionierung dieses Grundkörpers im Überzug, also durch eine Variierung der Dicke des Überzugs auf der Vorderund Rückseite des Grundkörpers bei unverändertem Grundkörper eine variable Brückenweite, also eine variable Einstellung des Abstandes zwischen zwei gegenüberliegenden Nasenplättchen auf der Brille erreicht werden.

Weitere Ausgestaltungen sind den Unteransprüchen zu entnehmen, zwei Ausführungsbeispiele des erfindungsgemäßen Pads werden nun anhand von Zeichnungen näher erläutert, es zeigen:
- Figur 1:: Einen Längsschnitt durch ein Nasenplättchen gemäß einem ersten Ausführungsbeispiel in der Ebene I-I der Figur 2,
- Figur 2:: eine Aufsicht auf das am Mittelteil montierte Nasenplättchen gemäß Figur 1,
- Figur 3:: einen Querschnitt durch das montierte Nasenplättchen gemäß Figur 1 in der Ebene III-III der Figur 2, und
- Figur 4-7:: Darstellung eines Nasenplättchens gemäß einem zweiten Ausführungsbeispiel der Erfindung.

Das Nasenplättchen besteht zunächst aus einem Grundkörper 10, der aus einem zähen, abriebfesten Material wie zum Beispiel Polycarbonat besteht und im wesentlichen als Flachteil ausgebildet ist, das mit einem mantelartigen Überzug 11 aus weichem Kunststoffmaterial, beispielsweise Silikon-Kautschuk überzogen ist. Im Grundkörper 10 sind Durchbrüche 10a,10b vorgesehen, durch die sich der Überzug 11 ebenfalls erstreckt und somit zusätzlich in seiner Position relativ zum Grundkörper 10 gehalten ist. Auf der Rückseite des Grundkörpers 10 erstrecken sich zwei gleich ausgebildete Verankerungsstifte 12,13 senkrecht zur Fläche des Grundkörpers 10. Diese Verankerungsstifte weisen eine Umfangsrinne 12a,13a in ihrem vorderen, aus dem Überzug 11 ragenden Teil auf.

Diese Rinne 12a,13a in den Veerankerungsstiften 12,13 arbeitet zusammen mit einer Bohrung 22 im Mittelteil 20. Diese Bohrung 22 besteht aus einem sich konusartig in Richtung des Überzuges 11 öffnenden, vorderen Teil und einem sich in Richtung zum Brillenglas erstreckenden, zylindrischen hinteren Teil, wobei im Übergangsbereich zwischen diesen beiden Teilen ein ebenfalls zylindrischer Bohrungsteil vorgesehen ist, der eine geringere lichte Weite als der genannte äußere Bohrungsteil aufweist, so daß eine umlaufende Ringschulter gebildet wird, bzw. unterhalb dieser Ringschulter eine Ringwulst 22a,23a, die so bemessen ist, daß sie so weit in die umlaufende Rinne 12a,13a der Verankerungsstifte 12,13 eingreift, daß diese von der Vorderseite her in die Bohrung eingerastet werden können. Die Länge der Verankerungsstifte 12,13 ist dabei so bemessen, daß die Verankerungsstifte nicht über den Mittelteil im Bereich der jeweiligen Bohrung hinausstehen, sondern dort versenkt sind.Der zylindrische Übergangsbereich der beiden Bohrungshälften dient dazu, einen gewissen Toleranzbereich bei der Tiefe der inneren, zylindrischen Bohrung zu schaffen, ohne daß die Gefahr besteht, daß der Durchtrittsquerschnitt für das hintere Ende des Verankerungsstiftes zu groß wird, wenn der zylindrische Bohrungsteil zu weit in den konusförmigen Bohrungsteil hineingetrieben würde.

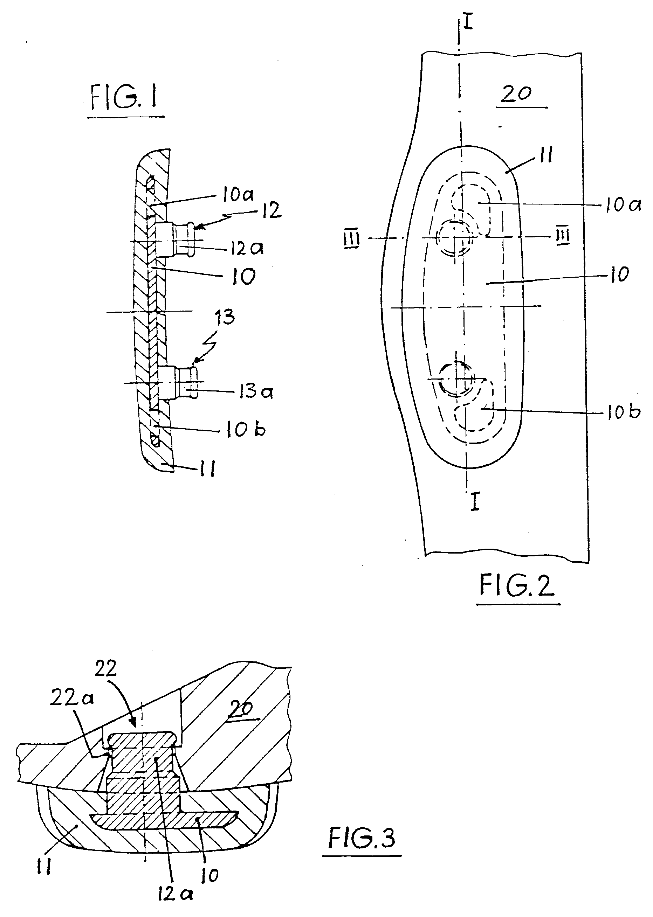

Bei dem in den Figuren 1 bis 3 dargestellten ersten Ausführungsbeispiel sind zwei Verankerungsstifte 12,13 vorgesehen, die zusammen die erforderliche Doppelfunktion erfüllen, also die Sicherung des Nasenplättchens gegen Zug in der Längsachse der Verankerungsstifte einerseits, als auch die Sicherung des Nasenplättchens gegen Verdrehen in der Ebene des Grundkörpers 10.

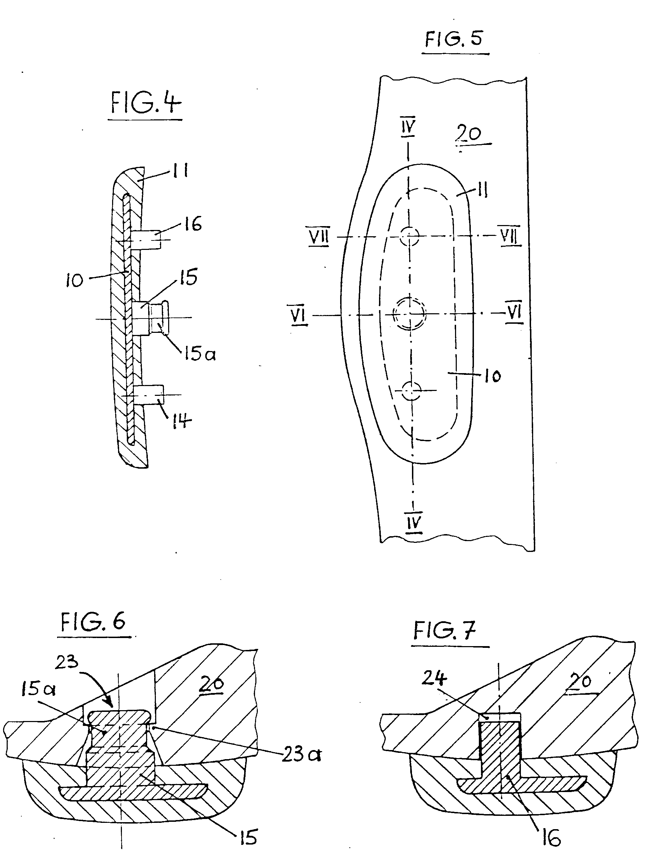

Bei dem in Figur 4 dargestellten zweiten Ausführungsbeispiel werden diese Funktionen verteilt, hier weist lediglich der mittlere Verankerungsstift 15 in Zusammenarbeit mit seiner zugehörigen Bohrung die oben beschriebene Struktur auf und sichert somit das Nasenplättchen gegen Zug, wobei beidseits dieses Verankerungsstiftes 15 zwei weitere Verankerungsstifte 14 und 16 vorgesehen sind, die lediglich als zylindrische Zapfen ausgebildet sind und in entsprechende zylindrische Bohrungen im Mittelteil einsteckbar sind. Letztere beiden Verankerungsstifte 14 und 16 dienen also lediglich der Sicherung des Nasenplättschens gegen Verdrehen.

Es versteht sich von selbst, daß auch andere Kombinationen und Ausgestaltungen solcher Verankerungsstifte in Anpassung an die spezielle Situation ohne weiteres möglich sind.

## Patentansprüche

1. Brillenfassung bestehend aus einem Mittelteil (20) und daran befestigten Nasenplättchen, welche welche aus einem harten Grundkörper (10) aus Kunststoff oder Metall, aus wenigstens zwei an diesem Grundkörper befestigten Verankerungsstiften (12-16) und aus einem weichen, hautverträglichen und rutschfesten Überzug (11) über dem Grundkörper bestehen, bei der die Verankerungsstifte als Befestigungsmittel für die Nasenplättchen am Mittelteil vorgesehen sind,
dadurch gekennzeichnet, daß die Verankerungsstifte (12-16) unmittelbar in Bohrungen (22,23,24) des Mittelteils (20) gehalten sind, daß die Länge der Verankerungsstifte (12-16) geringer oder höchstens gleich der Dicke des Mittelteils (20) im Bohrungsbereich ist, und daß mindestens einer der Verankerungsstifte (12,13,15) zur Halterung im Mittelteil (20) mindestens eine seitliche oder umlaufende Einkerbung oder Rinne (12a,13a,15a) aufweist, die in einer korrespondierenden Ausformung oder einem Ringwulst (22a,23a) der zugehörigen Bohrung (22,23) im Mittelteil (20) derart einrastet, daß diese Verankerungsstifte (12,13,15) in ihrer zugehörigen Bohrung (22,23) versenkt sind.

2. Brillenfassung nach Anspruch 1, dadurch gekennzeichnet, daß der Grundkörper (10) aus einem zähen, abriebfesten Kunststoffmaterial, wie zum Beispiel Polycarbonat, besteht.

3. Brillenfassung nach Anspruch 1 und 2, dadurch gekennzeichnet, daß der Grundkörper (10) Durchbrüche (10a,10b) zur Verankerung des weichen Überzuges (11) aufweist.

4. Brillenfassung nach Anspruch 1, dadurch gekennzeichnet, daß der Überzug (11) extrem weich ist mit einer Shore-A-Härte von 30-60.

5. Brillenfassung nach Anspruch 1, dadurch gekennzeichnet, daß mindestens einer der Verankerungsstifte (14,16) zur Sicherung gegen Verdrehen in eine zylindrische Bohrung (24) im Mittelteil (20) eingreift.

6. Brillenfassung nach Anspruch 1, dadurch gekennzeichnet, daß drei Verankerungsstifte (14,15,16) vorgesehen sind, von denen der mittlere in seiner zugehörigen Bohrung (25) einrastet, wogegen die beiden anderen, beidseitig dieses Verankerungsstiftes (15) angeordneten Verankerungsstifte (14,16) lediglich formschlüssig in ihre zugehörige Bohrung (24,26) eingesteckt sind.

7. Brillenfassung nach Anspruch 1, dadurch gekennzeichnet, daß die Verankerungsstifte (12-16) seitlich versetzt gegenüber der Glasnut des Augenrandes (20) angeordnet sind.

8. Brillenfassung nach Anspruch 1, dadurch gekennzeichnet, daß das Nasenplättchen eine konkave Rückseite hat.

## Claims

1. Spectacle frame, comprising a central portion (20) and nose pads, which are mounted thereon and include a hard basic body member (10) formed from plastics material or metal, at least two securing pins (12-16) mounted on this basic body member, and a soft, skin-compatible and slip-resistant covering (11) over the basic body member, wherein the securing pins are provided as means for fastening the nose pads to the central portion, characterised in that the securing pins (12-16) are directly retained in bores (22, 23, 24) in the central portion (20), in that the length of the securing pins (12-16) is smaller than, or at most identical to, the thickness of the central portion (20) in the bore region, and in that at least one of the securing pins (12, 13, 15), for support in the central portion (20), has at least one lateral or circumferential indentation or groove (12a, 13a, 15a), which engages in a corresponding projection or an annular bead (22a, 23a) of the associated bore (22, 23) in the central portion (20) such that these securing pins (12, 13, 15) are inserted in their associated bore (22, 23).

2. Spectacle frame according to claim 1, characterised in that the basic body member (10) is formed from a tough, wear-resistant plastics material, such as polycarbonate, for example.

3. Spectacle frame according to claims 1 and 2, characterised in that the basic body member (10) has openings (10a, 10b) for securement of the soft covering (11).

4. Spectacle frame according to claim 1, characterised in that the covering (11) is extremely soft with a Shore A hardness of 30-60.

5. Spectacle frame according to claim 1, characterised in that at least one of the securing pins (14, 16) engages in a cylindrical bore (24) in the central portion (20) to prevent twisting.

6. Spectacle frame according to claim 1, characterised in that three securing pins (14, 15, 16) are provided, the central one of which engages in its associated bore (25), whereas the other two securing pins (14, 16), which are disposed on each side of this securing pin (15), are merely inserted into their associated bore (24, 26) in a form-locking manner.

7. Spectacle frame according to claim 1, characterised in that the securing pins (12-16) are disposed in a laterally offset manner relative to the lens groove in the central portion (20).

8. Spectacle frame according to claim 1, characterised in that the nose pad has a concave rear surface.

## Revendications

1. Monture de lunettes constituée d'une partie centrale (20) et de plaquettes nasales fixées à celle-ci qui sont constituées d'un corps de base dur (10) en plastique ou en métal, d'au moins deux chevilles d'ancrage (12 à 16) fixées à ce corps de base et d'un revêtement souple, compatible avec la peau et non glissant (11) appliqué sur le corps de base, sur laquelle les chevilles d'ancrage sont prévues comme moyen de fixation des plaquettes nasales à la partie centrale, caractérisée par le fait que les chevilles d'ancrage (12 à 16) sont montées directement dans des trous (22, 23, 24) de la partie centrale (20), que la longueur des chevilles d'ancrage (12 à 16) est inférieure ou égale à l'épaisseur de la partie centrale (20) dans la zone des trous, et qu'au moins une des chevilles d'ancrage (12, 13, 15) présente pour sa fixation dans la partie centrale (20) au moins une entaille ou rigole latérale ou faisant le tour (12a, 13a, 15a) qui s'enclenche dans une partie façonnée correspondante ou un bourrelet annulaire (22a, 23a) du trou correspondant (22, 23) de la partie centrale (20) de façon telle que ces chevilles d'ancrage (12, 13, 15) soient enclavées dans le trou correspondant (22, 23).

2. Monture de lunettes selon la revendication 1, caractérisée par le fait que le corps de base (10) est constitué d'une matière plastique tenace et résistant à l'abrasion, par exemple de polycarbonate.

3. Monture de lunettes selon les revendications 1 et 2, caractérisée par le fait que le corps de base (10) présente des trous (10a, 10b) pour l' ancrage du revêtement souple (11).

4. Monture de lunettes selon la revendication 1, caractérisée par le fait que le revêtement (11) est extrêmement souple et a une dureté Shore A de 30 à 60.

5. Monture de lunettes selon la revendication 1, caractérisée par le fait qu'au moins une des chevilles d'ancrage (14, 16), pour empêcher la rotation, s'engage dans un trou cylindrique (24) de la partie centrale (20).

6. Monture de lunettes selon la revendication 1, caractérisée par le fait qu'il est prévu trois chevilles d'ancrage (14, 15, 16), celle du milieu s'enclenchant dans le trou correspondant (25) tandis que deux autres chevilles d'ancrage (14, 16), situées de part et d'autre de cette cheville du milieu (15), sont simplement engagées dans le trou correspondant (24, 26).

7. Monture de lunettes selon la revendication 1, caractérisée par le fait que les chevilles d'ancrage (12 à 16) sont décalées latéralement du drageoir du cercle (20).

8. Monture de lunettes selon la revendication 1, caractérisée par le fait que la plaquette nasale a un dos concave.
